# EUROPÄISCHE PATENTSCHRIFT

(11) **EP 3 535 041 B1**
(45) Veröffentlichungstag und Bekanntmachung des Hinweises auf die Patenterteilung: **15.12.2021**
(21) Anmeldenummer: 17783392.8
(22) Anmeldetag: 11.10.2017
(51) Int. Cl.: B01D 36/00, B01D 39/16, B01D 29/11, B01D 29/21, B01D 29/58

(54) **FILTERELEMENT**
FILTER ELEMENT
ÉLÉMENT FILTRANT

(30) Priorität: 04.11.2016 DE 102016013166
(43) Veröffentlichungstag der Anmeldung: 11.09.2019
(73) Patentinhaber: Hydac Filter Systems GmbH, 66280 Sulzbach/Saar (DE)
(72) Erfinder: HEGMANN, Martin, 66453 Gersheim (DE); SCHUNK, Andreas, 66914 Waldmohr (DE)
(74) Vertreter: Bartels und Partner, Patentanwälte
(86) Internationale Anmeldenummer: PCT/EP2017/001201
(87) Internationale Veröffentlichungsnummer: WO 2018/082799

(56) Entgegenhaltungen:
- EP-A1- 2 609 966
- DE-A1- 2 436 080
- DE-A1-102009 006 586
- DE-A1-102012 022 285
- DE-A1-102014 010 196
- DE-A1-102015 005 562
- GB-A- 880 537
- US-A- 2 387 368
- US-A- 2 801 009
- US-A- 3 313 417
- US-A1- 2007 125 698
- US-A1- 2008 245 719
- US-A1- 2016 023 149
- US-B1- 7 087 166

## Beschreibung

Die Erfindung betrifft ein Filterelement mit den Merkmalen im Oberbegriff von Anspruch 1. Ferner bezieht sich die Erfindung auf eine Vorrichtung mit einem solchen Filterelement.

Filterelemente dieser Art sind Stand der Technik. Solche Filterelemente finden weit verbreitete Anwendung in Hydrauliksystemen unterschiedlichster Auslegung, um durch Abreinigungen von Fremdstoffbelastungen aus dem Hydraulikfluid die Betriebssicherheit betreffender Systeme zu gewährleisten. Derartige Filterelemente kommen auch mit Vorteil in Kraftstoffversorgungssystemen zum Einsatz. So zeigt beispielhaft die DE 10 2011 119 868 A1 eine Filtervorrichtung für mit Wasserbeimengungen belastete Fluide, wie Dieselkraftstoff, mit einem Filterelement, das in einem Filtergehäuse von der Rohseite zur Reinseite hin vom betreffenden Fluid durchströmbar ist und für eine mehrstufig erfolgende Filtration und Wasserabscheidung mindestens je ein vorrangig wasserabscheidend wirksames Filtermaterial und ein vorrangig partikuläre Verschmutzungen rückhaltendes Filtermaterial aufweist, wobei eine das abgeschiedene Wasser aufnehmende Wassersammeleinrichtung vorhanden ist, und als vorrangig wasserabscheidend wirksames Filtermaterial dient ein Koaleszier-Filtermedium.

Aber auch Fluide wie Hydrauliköle weisen häufig emulgierte Wasserbestandteile auf, die bei Filtration zumindest teilweise abzutrennen wären. Übliche Filterelemente mit dem Stand der Technik entsprechender Bauweise werden dieser Forderung häufig nicht in ausreichendem Maße gerecht.

Die US 2008/0245719 A1 beschreibt ein Filterelement, das als Austauschelement konzipiert ist, dessen als Hohlkörper ausgebildetes und sich zwischen zwei Abschlussteilen, insbesondere in Form von Endkappen, erstreckendes Filtermedium plissiert mit einzelnen Filterfalten ausgebildet ist, wobei das Filtermedium ein Filtermaterial aus Cellulose aufweist, wobei ein Partikelfilter mit einem weiteren Filtermedium vorgesehen ist, und wobei zwischen den beiden Filtermedien ein fluiddurchlässiges Stützrohr angeordnet ist.

Weitere Filterelemente gehen aus der DE 10 2014 010 196 A1, der DE 10 2012 022 285 A1, der DE 10 2015 005 562 A1, der DE 10 2009 006 586 A1, der GB 880 537, der DE 24 36 080 A1, der US 3 313 417, der US 2 387 368 und der US 2 801 009 hervor.

Durch US 7 087 166 B1 ist ein Wechselfilterelement bekannt mit Filtermedien aus Cellulose für ein inneres und ein äußeres Filterelement. Das gefaltete Cellulosemedium wird von einem Partikelfilter umfasst, wobei zwischen den beiden Medien ein Stützrohr angeordnet ist und auf der demgegenüber abgewandten, inneren Seite des gefalteten Cellulosemediums befindet sich ein weiteres Stützrohr.

Durch US 2007/0125698 A1 ist ein gattungsgemäßes Filterelement bekannt, das als Austauschelement konzipiert ist, dessen als Hohlkörper ausgebildetes und sich zwischen zwei Abschlussteilen, insbesondere in Form von Endkappen, erstreckendes Filtermedium plissiert mit einzelnen Filterfalten ausgebildet ist, wobei das Filtermedium ein Filtermaterial aus Cellulose aufweist, wobei ein Partikelfilter mit einem weiteren plissierten Filtermedium vorgesehen ist, dessen Filterfalten eine größere Packungsdichte aufweisen, und eine größere Faltenhöhe besitzen als die Filterfalten des einen Filtermediums aus Cellulosematerial, wobei zwischen den beiden Filtermedien ein fluiddurchlässiges Stützrohr angeordnet ist, wobei das aus Cellulose bestehende Filtermedium von dem Partikelfilter umfasst ist, und wobei auf der von diesem abgewandten Seite des Cellulose-Filtermediums ein weiteres Stützrohr angeordnet ist.

Ausgehend von diesem Stand der Technik liegt der Erfindung die Aufgabe zugrunde, ein Filterelement zur Verfügung zu stellen, das bei der Filtration von Fluiden mit einer Öl-Wasser-Emulsion eine besonders effektive Abtrennung von Wasser ermöglicht, das funktionssicher arbeitet und das kostengünstig herstellbar ist.

Erfindungsgemäß ist diese Aufgabe durch ein Filterelement gelöst, das die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass das aus Cellulose bestehende Filtermaterial mit einer gleichförmigen Dicke von mehr als 2 mm gleich hohe Filterfalten aufweist, die, mit tal- und gipfelseitig gleichen Biegeradien versehen, unter Auslassen der Schweiß- und/oder Klebstoffverbindung einstückig ineinander übergehen, und dass das zum Hohlkörper geformte Filtermaterial mit einzelnen Filterfalten spitz aufeinander zulaufende Fluidräume begrenzt. Bei dieser gleichförmigen Dicke und gleichförmigen Faltengeometrie ist eine starke Koaleszierwirkung erreichbar, was eine besonders effektive Wasserabscheidung ermöglicht und die Aufeinanderfolge der derart gebildeten Fluidräume begünstigt die Anströmung des Cellulosematerials an möglichst großer frei liegender Filteroberfläche..

Das aus Cellulose bestehende Filtermedium ist von einem Partikelfilter umfasst. Dieses kann beim Filtrationsvorgang die Funktion eines Vorfilters wahrnehmen.

Die zwischen den Endkappen verlaufenden Stützrohre erhöhen die Festigkeit der Baueinheit des Filterelements.

Bei der Durchströmung mit dem Fluid wirken die Cellulosefasern koaleszierend, wodurch sich aus dem Wasseranteil der Emulsion vergrößerte Tropfen bilden, die aufgrund des Dichteunterschiedes von Wasser und Öl nach unten absinken, so dass es zu einer Abtrennung vom weniger dichten Medium kommt. Es hat sich in praktischen Versuchen herausgestellt, dass ein dahingehendes Filterelement funktionssicher die angesprochene Wasser-Abtrennung vornimmt und darüber hinaus kostengünstig in der Herstellung ist. Aufgrund der Plissierung des Filtermediums unter Bildung von einzelnen Filterfalten wird die Filteroberfläche deutlich vergrößert, so dass in besonders effektiver Weise die angesprochene Abtrennung und mithin mit hohem Wirkungsgrad veranlasst ist. Dies hat so keine Entsprechung im Stand der Technik.

Vorzugsweise ist das den Hohlkörper bildende plissierte Filtermedium an seinen beiden einander benachbart zugewandten Längsrändern über eine Schweiß- und/oder Klebstoffverbindung fest verbunden. Die Seitengeometrie ist durch den festen Verbund bleibend gesichert.

Das aus Cellulose bestehende Filtermedium kann mit besonderem Vorteil dem Abtrennen von Wasser aus Hydraulikölen dienen, wobei das Filtermedium die Wassertropfen im Wasser-Öl-Gemisch vom Volumen her vergrößert, die aufgrund des Dichteunterschieds zwischen Wasser und Öl unter der Wirkung der Schwerkraft absinken, wobei durch Schwerkrafteinfluss ein Trennvorgang stattfindet.

Bei besonders vorteilhaften Ausführungsbeispielen ist das aus Cellulose bestehende Filtermedium zumindest auf einer seiner Seiten, wie der Filtratund der Unfiltratseite, mit mindestens einer Schutzlage, wie einem Vlies oder Gewebe, versehen, das dem Faltenverlauf nachfolgt. Dadurch ist das Cellulosematerial von beiden Seiten her gegen Beschädigungen geschützt. Bei einem schützenden Gewebe kann es sich mit Vorteil um ein feines Metallgitter handeln, wie es bei dem Stand der Technik entsprechenden Filterelementen bei einem sog. Mesh-Pack vorgesehen ist.

Dabei kann die Anordnung mit Vorteil derart getroffen sein, dass der Partikelfilter ein weiteres plissiertes Filtermedium aufweist, dessen Filterfalten eine größere Packungsdichte aufweisen und eine größere Faltenhöhe besitzen als die Filterfalten des einen Filtermediums aus Cellulosematerial. Das Partikelfilter kann in der bei derartigen Filtermedien üblichen Weise aus mehreren Materiallagen aufgebaut sein.

In vorteilhafter Weise können dabei die beiden einander gegenüberliegenden Endkappen als Abschlussteile zwischen sich die beiden als Hohlzylinder ausgebildeten Hohlkörper der beiden Filtermedien aufnehmen, wobei der Partikelfilter den Cellulosefilter vorzugsweise auf dessen Abströmseite umfasst.

Gegenstand der Erfindung ist auch eine Vorrichtung mit einem Filterelement nach einem der Patentansprüche 1 bis 6, wobei die Vorrichtung die Merkmale des Patentanspruchs 7 in seiner Gesamtheit aufweist. Demgemäß weist die Vorrichtung ein Filtergehäuse mit einem Aufnahmeraum für das Filterelement mit mehreren Fluidanschlussstellen auf und ist dadurch gekennzeichnet, dass der Aufnahmeraum zumindest teilweise von einer Aufnahmestange durchgriffen ist, auf die zentrisch das Filterelement aufsetzbar ist, das über seine eine Endkappe und eine zusätzliche Festlegeeinrichtung an der Stange festlegbar ist. Dadurch, dass für das Filterelement eine zentrale Halterung mit zentral gelegener innerer Haltestange und zugeordneter Festlegeeinrichtung vorgesehen ist und daher keine über den Außenumfang des Filterelements auskragenden Haltemittel für das Filterelement vorhanden sind, ist eine platzsparende Bauweise des Filtergehäuses ermöglicht.

Mit Vorteil kann hierbei die Anordnung so getroffen sein, dass im montierten Zustand des Filterelements auf der Aufnahmestange im Gehäuse eine jede Endkappe über einen Abstandshalter mit Dichtfunktion einmal an der Festlegeeinrichtung und einmal an einem Zwischenboden des Gehäuses gelagert ist. Dadurch übernimmt die Festlegeeinrichtung die zusätzliche Abdichtung der Filtratseite im Filtergehäuse.

Bei einer Durchströmung des Filterelements von außen oder innen nach innen bzw. nach außen kann der Zwischenboden nebst dem Filterelement einen Wassersammelraum mit Öl- und Wasser-Fluidanschlussstellen auf der Reinseite von einem Unfiltratraum trennen, der eine Fluidanschlussstelle für die Zufuhr des Öl-Wasser-Gemisches auf der Unfiltratseite des Filterelements aufweist.

Mit Vorteil kann das Gehäuse als Einbauteil in einen Fluidtank konzipiert und zur Umgebung hin mittels eines abnehmbaren Gehäusedeckels verschlossen sein.

Nachstehend ist die Erfindung anhand von in der Zeichnung dargestellten Ausführungsbeispielen im Einzelnen erläutert. Es zeigen:
- Fig. 1: einen Längsschnitt eines Ausführungsbeispiels der erfindungsgemäßen Vorrichtung, die zur Aufnahme eines erfindungsgemäßen Filterelements vorgesehen ist;
- Fig. 2: einen Längsschnitt eines abgewandelten Ausführungsbeispiels der erfindungsgemäßen Vorrichtung;
- Fig. 3: einen Längsschnitt des gesondert dargestellten Filterelements gemäß einem Ausführungsbeispiel der Erfindung;
- Fig. 4: einen Horizontalschnitt des Ausführungsbeispiels des Filterelements;
- Fig. 5: einen vergrößert gezeichneten Teilausschnitt des in Fig. 4 mit V bezeichneten kreisförmig eingehüllten Bereichs; und
- Fig. 6: eine abgebrochen und schematisch vereinfachte perspektivische Schrägansicht eines Teils einer Falteinrichtung zur Herstellung des Filtermediums aus Cellulose.

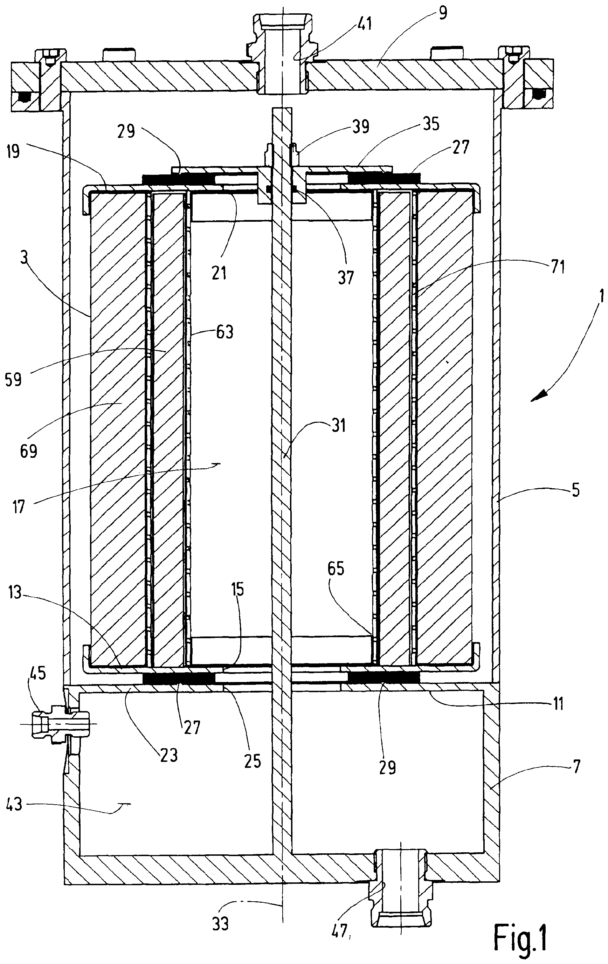

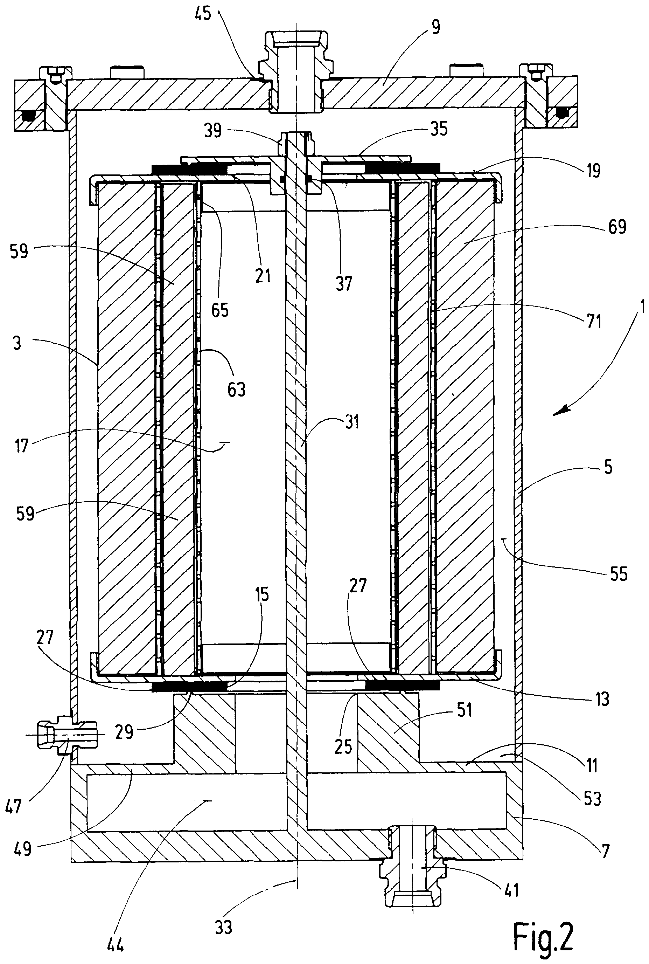

In den Fig. 1 und 2 ist ein Filtergehäuse als Ganzes mit 1 bezeichnet, das zur Aufnahme eines Filterelements 3 gemäß einem Ausführungsbeispiel der Erfindung vorgesehen ist. Das Filtergehäuse 1 weist ein Hauptteil 5 in Form eines Hohlzylinders auf, das an dem in den Figuren unteren Ende durch ein Bodenteil 7 verschlossen ist, das mit dem Hauptteil 5 verschweißt ist. Am oberen Ende ist das Filtergehäuse 1 durch einen Gehäusedeckel 9 geschlossen, der für Einbau und Ausbau des Filterelements 3 abnehmbar ist. Bei einem Einbau der Filtervorrichtung in einen Fluidtank, beispielsweise in einen Vorratstank für Hydrauliköl, kann der Gehäusedeckel 9 den Verschluss für eine Tanköffnung bilden. Durch das Bodenteil 7 ist innerhalb des Aufnahmeraums ein Zwischenboden 11 gebildet, auf dem das in den Aufnahmeraum eingesetzte Filterelement mit seinem unteren Abschlussteil gelagert ist. Dieses ist durch eine übliche, aus Kunststoffmaterial bestehende Endkappe 13 gebildet, die eine zentrale Öffnung 15 als Zugang zum inneren Filterhohlraum 17 des Filterelements 3 aufweist. Als oberes Abschlussteil ist eine der unteren Endkappe 13 entsprechende obere Endkappe 19 vorgesehen, die ebenfalls eine zentrale Öffnung 21 besitzt.

Bei dem in Fig. 1 dargestellten Ausführungsbeispiel, das für eine Durchströmung des Filterelements 3 von dessen Außenseite her zum inneren Filterhohlraum 17 hin vorgesehen ist, besitzt der Zwischenboden 11 als Lagerfläche für das Filterelement 3 eine ebene Wand 23, die sich von Außenumfang zu Außenumfang durchgehend erstreckt und eine zentrale Durchgangsöffnung 25 aufweist, die mit der Öffnung 15 des aufgesetzten Filterelements 3 fluchtet. Auf der Wand 23 ist die untere Endkappe 13 über ein einen Abstandhalter 27 bildendes Dichtelement gelagert. Für die Dichtfunktion kann der Abstandhalter 27 aus einem Elastomer oder einem metallischen Dichtelement gebildet sein. An der Auflagefläche für den Abstandhalter 27 weist die Wand 23 des Zwischenbodens 11 eine geringfügig vorspringende, umlaufende Ringrippe 29 auf, die eine Dichtkante am Abstandhalter 27 bildet.

Für die Festlegung des Filterelements 3 auf der Lagerung am Zwischenboden 11 ist eine Aufnahmestange 31 vorgesehen, die sich, zur Gehäuselängsachse 33 koaxial, vom Grund des Bodenteils 7 ausgehend durch den inneren Filterhohlraum 17 des aufgesetzten Filterelements 3 erstreckt. Zur Bildung einer Festlegeeinrichtung ist auf dem oberen Endbereich der Aufnahmestange 31 ein Spannteller 35 verschiebbar gelagert und gegenüber der Stange 31 durch einen Dichtring 37 abgedichtet. Der die obere Endkappe 19 übergreifende Spannteller 35 ist durch eine auf einem Außengewinde der Stange 31 sitzende Mutter 39 gegen das Filterelement 3 anlegbar, wobei, in entsprechender Weise wie bei der an der unteren Endkappe 13 gebildeten Halterung, ein Abstandhalter 27 mit Dichtfunktion zwischen Spannteller 35 und Endkappe 19 eingelegt ist und der Spannteller 35 zur Unterstützung der Abdichtung wiederum eine eine Dichtkante bildende, vorspringende, umlaufende Ringrippe 29 aufweist. Bei dem Ausführungsbeispiel von Fig. 1, bei dem die Durchströmung des Filterelements 3 von außen nach innen vorgesehen ist, befindet sich am Gehäusedeckel 9 eine Fluidanschlussstelle 41 für die Zufuhr einer Öl-Wasser-Emulsion als Unfiltrat. Am Bodenteil 7 ist für den Ausstrom des Öls als Filtrat aus dem Raum 43 des Bodenteils eine Anschlussstelle 45 vorgesehen, die in der Nähe der oberen Wand 23 gelegen ist. Als Auslass für abgeschiedenes Wasser befindet sich am Grund des Raumes 43 und mithin bodenseitig eine weitere Anschlussstelle 47.

Bei dem für eine Durchströmung des Filterelements 3 vom inneren Filterhohlraum 17 her nach außen vorgesehenen Beispiel von Fig. 2 ist, bei sonst gleicher Ausbildung der Fixierung des Filterelements 3 mittels der Festlegeeinrichtung, die Bauweise des Zwischenbodens 11 gegenüber Fig. 1 abgewandelt. Anstelle der ebenen, durchgehenden Wand 23 von Fig. 1 bildet der Zwischenboden 11 eine äußere Kreisscheibe 49, an deren radial innerem Ende sich ein nach oben vorstehender Ringkörper 51 anschließt, der mit seiner oberen Endfläche die Lagerung für die untere Endkappe 13 des Filterelements 3 bildet, wobei, wie in Fig. 1, an der Lagerfläche ein Abstandhalter 27 mit Dichtfunktion eingelegt ist und an der Lagerfläche des Ringkörpers 51 als Dichtkante eine vorspringende Ringrippe 29 vorgesehen ist. Bei dieser Form des Zwischenbodens 11 befindet sich die Anschlussstelle 41 für die Öl-Wasser-Emulsion am Grund des Raums 44, der mit dem inneren Filterhohlraum 17 in Verbindung ist. Der den Ringkörper 51 umgebende Raum 53, der mit der Filtratseite 55 an der Außenseite des Filterelements 3 in Verbindung ist, bildet einen Wasser-Sammelraum, an dem sich die Anschlussstelle 47 für den Abstrom abgeschiedenen Wassers befindet. Für den Austritt des Öls als Filtrat ist hierbei die Anschlussstelle 45 in zentraler Lage am Deckel 9 vorgesehen.

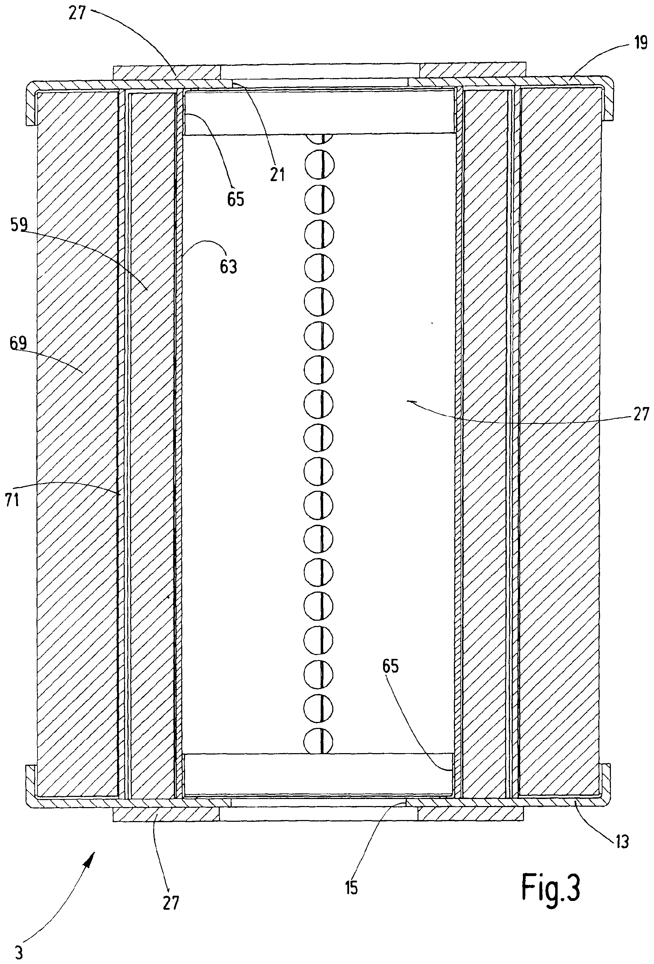

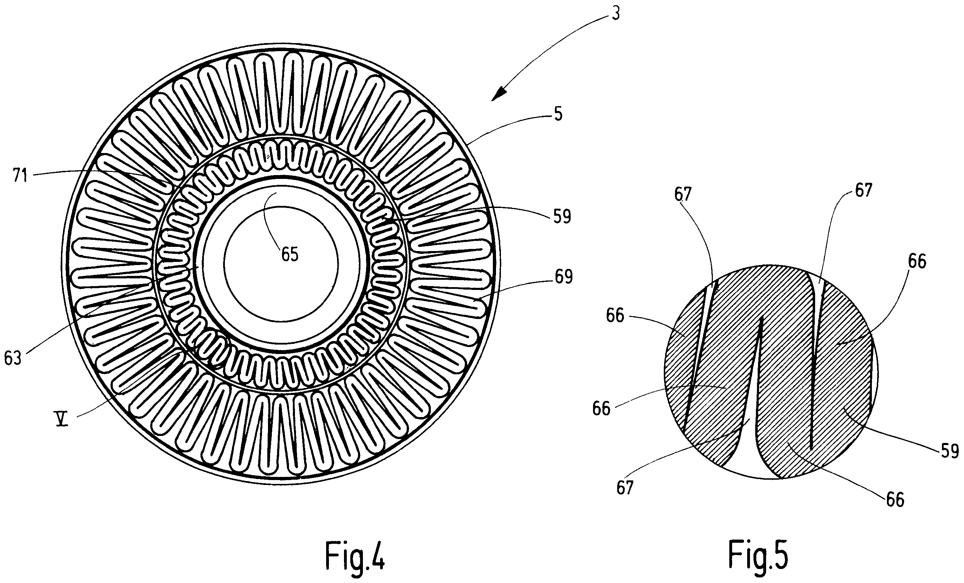

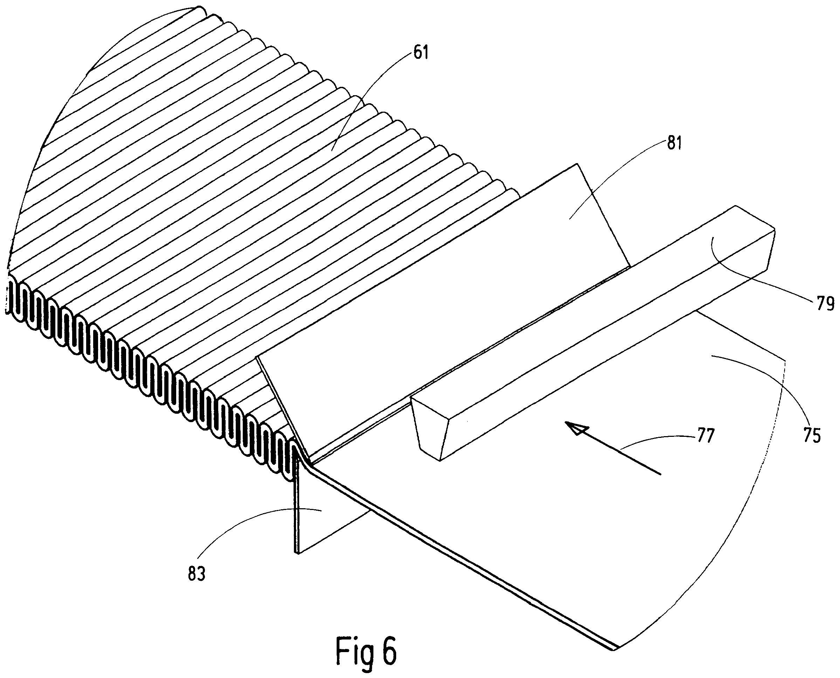

Einzelheiten des Filterelements 3 sind deutlicher in den Fig. 3 bis 5 dargestellt. Das zwischen den Endkappen 13, 19 befindliche Filtermedium weist ein aus Cellulose bestehendes Filtermaterial 59 auf, das aus einer plissierten Filtermatte 61 (Fig. 6) besteht, die zu einem kreiszylindrischen Hohlkörper geformt ist, der an der Stoßstelle durch eine geklebte oder geschweißte Längsnaht geschlossen ist. Das Cellulose-Filtermaterial 59 ist aus einer Filtermatte 61 mit einer gleichförmigen Dicke von mehr als 2 mm derart plissiert, dass gleich hohe Filterfalten gebildet sind, die tal- und gipfelseitig gleiche Biege- oder Faltradien aufwiesen. An der Innenseite des sich zwischen den Endkappen 13 und 15 erstreckenden Hohlkörpers des Cellulose-Filtermaterials 59 liegt ein sich ebenfalls von Endkappe 13 zu Endkappe 19 erstreckendes, fluiddurchlässiges Stützrohr 63 an. Wie am besten der Fig. 3 entnehmbar ist, liegt an der Innenseite jeder Endkappe 13 und 19 ein Abstützring 65 an, der das Stützrohr 63 in Anlage an der Innenseite des Cellulose-Filtermaterials 59 hält. Wie der in Fig. 5 dargestellte, vergrößerte Ausschnitt zeigt, sind bei dem mit gleichen inneren und äußeren Biegeradien gefalteten Filtermaterial 59 zwischen den einzelnen Falten 66 spitz zulaufende Fluidräume 67 gebildet. Dadurch sind nicht nur Oberflächenbereiche des Filtermaterials 59 als wirksame Filterfläche freiliegend, sondern es sind auch Freiräume für absinkende Wassertropfen gebildet, worauf unten noch eingegangen wird.

Das Cellulose-Filtermaterial 59 ist außenseitig von einem Partikelfilter 69 umfasst, das, wie das Cellulose-Filtermaterial 59, als kreiszylindrischer Hohlkörper zwischen den Endkappen 13 und 19 angeordnet ist. Das Partikelfilter 69 ist in üblicher Bauweise in der Art eines sog. Mesh-Pack aus mehreren plissierten Lagen aufgebaut. Zwischen dem Partikelfilter 69 und dem Cellulose-Filtermaterial 59 befindet sich ein weiteres fluiddurchlässiges Stützrohr 71, das sich von unterer Endkappe 13 zu oberer Endkappe 19 erstreckt.

Die Fig. 6 zeigt in vereinfachter Darstellung die Herstellung der das Cellulose-Filtermaterial 59 bildenden plissierten Filtermatte 61. Wie gezeigt, wird eine Bahn 75 des mehr als 2 mm dicken Cellulosematerials in mit Pfeil 77 angedeuteter Richtung unter einem Sprühbalken 79 hindurch bewegt, der die noch ebene Bahn 75 befeuchtet und in einen für einen Faltvorgang günstigen erweichten Zustand bringt. Die Bahn 75 läuft dann durch eine Faltmaschine üblicher Bauweise hindurch, die mittels beweglicher Faltmesser 81 und 83 den Faltvorgang durchführt, durch den die plissierte Filtermatte 61 gebildet wird. Nach dem Formen des das Cellulose-Filtermaterial 59 bildenden Hohlkörpers wird dieser durch Verbinden seiner beiden Längsseiten mittels eines Schweiß- und/oder Klebeverfahrens geschlossen, wonach das Cellulose-Filtermaterial 59 nach erfolgter Trocknung in das Filterelement 3 eingebaut wird. Vor dem Durchführen des Faltvorgangs wird auf einer Seite, vorzugsweise auf beiden Seiten der noch ebenen Bahn 75 eine einen Schutzüberzug bildende Lage, die vorzugsweise aus einem Vlies oder einem Gewebe, wie einem feinen Metallgeflecht, besteht, mittels der Faltmaschine zusammen mit den jeweiligen anderen Lagen eingefaltet.

Im Filtrationsbetrieb wird bei dem in Fig. 1 gezeigten Beispiel der Vorrichtung das Filterelement 3 von der Außenseite des Partikelfilters 69 her zum inneren Filterhohlraum 17 hin durchströmt. Dementsprechend bildet die Anschlussstelle 41 den Einlass für das Unfiltrat in Form einer Öl-Wasser-Emulsion. Bei der Durchströmung wirkt das Cellulosematerial des Cellulose-Filtermaterials 59 als Koalesziermedium, so dass aus dem Wassergehalt der Emulsion vergrößerte Tropfen gebildet werden, die entlang des Stützrohres 63 absinken und über die Öffnungen 15 der Endkappe und 25 in der Wand 23 des Zwischenbodens 11 in den Raum 43 absinken, der dadurch einen Wasser-Sammelraum bildet. Die am Grund des Raums 43 befindliche Anschlussstelle 47 bildet hierbei den Auslass für abgeschiedenes Wasser. Für das Filtrat, das aus dem inneren Filterhohlraum 17 ebenfalls über die Öffnungen 15 und 21 in den Raum 43 eintritt, bildet die Anschlussstelle 45 den Filtratausgang. Da die Anschlussstelle 45 am oberen Endbereich des Raums 43 angeordnet ist, befindet sie sich auf einem Niveau oberhalb der durch den Dichteunterschied Öl/Wasser gebildeten Trennlinie.

Bei dem Ausführungsbeispiel von Fig. 2 ist im Betrieb das Filterelement 3 von seinem inneren Filterhohlraum 17 her nach außen hin durchströmt. Dementsprechend bildet die Anschlussstelle 41 an dem Raum 44 unterhalb des Zwischenbodens 11 den Einlass für die Öl-Wasser-Emulsion, die über die Öffnung 25 zwischen dem Ringkörper 51 in den Filterhohlraum 17 einströmt. Die bei der Durchströmung des Cellulose-Filtermaterials 59 durch Koaleszenz gebildeten Wassertropfen, die entlang des abströmseitigen Stützrohres 71 absinken, gelangen bei der gegebenen Strömungsrichtung zur Filtratseite 55, die an der unteren Endkappe 13 in den Raum 53 übergeht, der vom Zwischenboden 11 und der Außenseite des Ringkörpers 51 des Bodenteils 7 begrenzt ist. Dieser Raum 53 bildet dadurch den WasserSammelraum, aus dem das abgeschiedene Wasser über die am Raum 53 befindliche Anschlussstelle 47 abströmt. Am Gehäusedeckel 9, der den oberen Abschluss der Filtratseite 55 bildet, strömt das Öl als Filtrat über die Anschlussstelle 45 aus.

## Patentansprüche

1. Filterelement (3), das als Austauschelement konzipiert ist, dessen als Hohlkörper ausgebildetes und sich zwischen zwei Abschlussteilen, insbesondere in Form von Endkappen (13, 19), erstreckendes Filtermedium (59) plissiert mit einzelnen Filterfalten (66) ausgebildet ist, wobei das Filtermedium (59) ein Filtermaterial (61) aus Cellulose aufweist, wobei ein Partikelfilter mit einem weiteren plissierten Filtermedium (69) vorgesehen ist, dessen Filterfalten eine größere Packungsdichte aufweisen und eine größere Faltenhöhe besitzen als die Filterfalten (66) des einen Filtermediums (59) aus Cellulosematerial, wobei zwischen den beiden Filtermedien (59, 69) ein fluiddurchlässiges Stützrohr (71) angeordnet ist, wobei das aus Cellulose bestehende Filtermedium (59) von dem Partikelfilter (69) umfasst ist, und wobei auf der von diesem abgewandten Seite des Cellulose-Filtermediums (59) ein weiteres Stützrohr (63) angeordnet ist, **dadurch gekennzeichnet, dass** das aus Cellulose bestehende Filtermaterial (61) mit einer gleichförmigen Dicke von mehr als 2 mm gleich hohe Filterfalten (66) aufweist, die, mit tal- und gipfelseitig gleichen Biegeradien versehen, unter Auslassen der Schweißund/oder Klebstoffverbindung einstückig ineinander übergehen, und dass das zum Hohlkörper geformte aus Cellulose bestehende Filtermaterial (61) mit einzelnen Filterfalten (66) spitz aufeinander zulaufende Fluidräume (67) begrenzt.

2. Filterelement nach Anspruch 1, **dadurch gekennzeichnet, dass** das den Hohlkörper bildende plissierte Filtermedium (59) an seinen beiden einander benachbart zugewandten Längsrändern über eine Schweißund/oder Klebstoffverbindung fest verbunden ist.

3. Filterelement nach Anspruch 1 oder 2, **dadurch gekennzeichnet, dass** das aus Cellulose bestehende Filtermedium (59) dem Abtrennen von Wasser aus Hydraulikölen dient und Wassertropfen im Wasser-Öl-Gemisch vom Volumen her vergrößert, die aufgrund des Dichteunterschieds zwischen Wasser und Öl unter der Wirkung der Schwerkraft absinken.

4. Filterelement nach einem der vorstehenden Ansprüche, **dadurch gekennzeichnet, dass** das aus Cellulose bestehende Filtermedium (59) zumindest auf einer seiner Seiten, wie der Filtrat- und der Unfiltratseite, mit mindestens einer Schutzlage, wie einem Vlies oder Gewebe, versehen ist, das dem Faltenverlauf nachfolgt.

5. Filterelement nach einem der vorstehenden Ansprüche, **dadurch gekennzeichnet, dass** der Partikelfilter (69) ein weiteres plissiertes Filtermedium aufweist, dessen Filterfalten eine größere Packungsdichte aufweisen und eine größere Faltenhöhe besitzen als die Filterfalten (66) des einen Filtermediums (59) aus Cellulosematerial.

6. Filterelement nach einem der vorstehenden Ansprüche, **dadurch gekennzeichnet, dass** die beiden einander gegenüberliegenden Endkappen (13, 19) als Abschlussteile zwischen sich die beiden als Hohlzylinder ausgebildeten Hohlkörper der beiden Filtermedien (59, 69) aufnehmen und dass der Partikelfilter (69) den Cellulosefilter (59) vorzugsweise auf dessen Abströmseite umfasst.

7. Vorrichtung mit einem Filterelement (3) nach einem der vorhergehenden Ansprüche mit einem Filtergehäuse (1), das einen Aufnahmeraum für das Filterelement (3) mit mehreren Fluidanschlussstellen (41, 45, 47) aufweist, **dadurch gekennzeichnet, dass** der Aufnahmeraum zumindest teilweise von einer Aufnahmestange (31) durchgriffen ist, auf die zentrisch das Filterelement (3) aufsetzbar ist, das über seine eine Endkappe (19) und eine zusätzliche Festlegeeinrichtung (35, 39) an der Stange (31) festlegbar ist.

8. Vorrichtung nach Anspruch 7, **dadurch gekennzeichnet, dass** im montierten Zustand des Filterelements (3) auf der Aufnahmestange (31) im Gehäuse (1) eine jede Endkappe (13, 19) über einen Abstandshalter (27) mit Dichtfunktion einmal an der Festlegeeinrichtung (35, 39) und einmal an einem Zwischenboden (11) des Gehäuses (1) gelagert ist.

9. Vorrichtung nach Anspruch 7oder 8, **dadurch gekennzeichnet, dass** bei einer Durchströmung des Filterelements (3) von außen oder innen nach innen bzw. nach außen der Zwischenboden (11) nebst dem Filterelement (3) einen Wassersammelraum (43, 53) mit Öl- und Wasser-Fluidanschlussstellen (45, 47) auf der Reinseite von einem Unfiltratraum trennt mit einer Fluidanschlussstelle (41, 47) für die Zufuhr des Öl-Wasser-Gemisches auf der Unfiltratseite des Filterelements (3).

10. Vorrichtung nach einem der Ansprüche 7 bis 9, **dadurch gekennzeichnet, dass** das Gehäuse (1) als Einbauteil in einen Fluidtank konzipiert und zur Umgebung hin mittels eines abnehmbaren Gehäusedeckels (9) verschlossen ist.

## Claims

1. Filter element (3), which is designed as a replacement element, the filter medium (59) of which, configured as a hollow body and extending between two end parts, in particular in the form of end caps (13, 19), is pleated with individual filter pleats (66), wherein the filter medium (59) comprises a filter material (61) of cellulose, wherein a particulate filter with a further pleated filter medium (69) is provided, the filter pleats thereof having a greater packing density and a greater pleat height than the filter pleats (66) of the filter medium (59) of cellulose material, wherein a fluid-permeable supporting tube (71) is arranged between the two filter media (59, 69), wherein the filter medium (59) consisting of cellulose is enclosed by the particulate filter (69), and wherein a further supporting tube (63) is arranged on the side of the cellulose filter medium (59) directed away from the particulate filter, **characterised in that** the filter material (61) consisting of cellulose, has filter pleats (66) of equal height with a uniform thickness of more than 2 mm which, provided with identical bending radii on the valley and peak sides, merge integrally into each other with the omission of the welded and/or adhesive joint, and **in that** the filter material (61), which consists of cellulose and is formed into a hollow body, delimits, with individual filter pleats (66), fluid spaces (67) which taper towards each other.

2. Filter element according to claim 1, **characterised in that** the pleated filter medium (59) forming the hollow body is firmly joined via a welded and/or adhesive joint on its two longitudinal edges facing each other adjacently.

3. Filter element according to claim 1 or 2, **characterised in that** the filter medium (59) consisting of cellulose is used to separate water from hydraulic oils and increases the volume of water droplets in the water-oil mixture which sink under the effect of gravity due to the difference in density between water and oil.

4. Filter element according to one of the preceding claims, **characterised in that** the filter medium (59) consisting of cellulose is provided, at least on one of its sides, such as the filtrate side and the unfiltered medium side, with at least one protective layer, such as a non-woven or woven fabric, which follows the pleated profile.

5. Filter element according to one of the preceding claims, **characterised in that** the particulate filter (69) comprises a further pleated filter medium, the filter pleats thereof having a greater packing density and a greater pleat height than the filter pleats (66) of the one filter medium (59) of cellulose material.

6. Filter element according to one of the preceding claims, **characterised in that** the two mutually opposing end caps (13, 19) as end parts receive between them the two hollow bodies, configured as hollow cylinders, of the two filter media (59, 69) and **in that** the particulate filter (69) encloses the cellulose filter (59) preferably on its outflow side.

7. Device having a filter element (3) according to one of the preceding claims with a filter housing (1) which comprises a receiving space for the filter element (3) with a plurality of fluid connection points (41, 45, 47), **characterised in that** the receiving space is at least partially penetrated by a receiving rod (31), onto which the filter element (3) can be centrally placed, which filter element can be fixed to the rod (31) via its one end cap (19) and an additional fixing device (35, 39).

8. Device according to claim 7, **characterised in that**, when the filter element (3) is in its assembled state on the receiving rod (31) in the housing (1), each end cap (13, 19) is mounted via a spacer (27) with a sealing function, once on the fixing device (35, 39) and once on an intermediate base (11) of the housing (1).

9. Device according to claim 7 or 8, **characterised in that** when the flow through the filter element (3) is from outside to inside or from inside to outside respectively, the intermediate base (11), together with the filter element (3), separates a water collection space (43, 53) with oil and water fluid connection points (45, 47) on the clean side from an unfiltered medium space with a fluid connection point (41, 47) for supplying the oil-water mixture on the unfiltered medium side of the filter element (3).

10. Device according to one of claims 7 to 9, **characterised in that** the housing (1) is designed as a fitting in a fluid tank and is sealed to the environment by means of a removable housing cover (9).

## Revendications

1. Elément (3) de filtre, qui est conçu comme élément à remplacer, dont le milieu (59) filtrant, constitué sous la forme d'une pièce creuse et s'étendant entre deux parties de fermeture, notamment sous forme de coiffes (13, 19) d'extrémité, est constitué plissé en ayant des plis (66) de filtre individuels, dans lequel le milieu (59) filtrant a une matière (61) filtrante en cellulose, dans lequel il est prévu un filtre de particules ayant un autre milieu (69) filtrant plissé, dont les plis de filtre ont une densité de tassement plus grande et possèdent une hauteur de pli plus grande que les plis (66) de filtre du un milieu (59) filtrant en matière cellulosique, dans lequel entre les deux milieux (59, 69) filtrants est disposé un tube (71) d'appui perméable au fluide, dans lequel le milieu (59) filtrant constitué de cellulose est entouré du filtre (69) de particules et dans lequel du côté, loin de celui-ci, du milieu (59) filtrant en cellulose est disposé un autre tube (63) d'appui, **caractérisé en ce que** la matière (61) filtrant constituée de cellulose a des plis (66) de filtre de même hauteur, d'une épaisseur uniforme de plus de 2 mm, qui, pourvus de mêmes rayons de courbure du côté des creux et des sommets, se transforment les uns dans les autres d'une seule pièce, en omettant la liaison par soudure et/ou par collage, et **en ce que** la matière (61) filtrante constituée de cellulose conformée en pièce creuse, délimite par divers plis (66) de filtre des espaces (67) pour du fluide, qui vont en pointe les uns sur les autres.

2. Elément de filtre suivant la revendication 1, **caractérisé en ce que** le milieu (59) filtrant plissé formant la pièce creuse est relié fixement, à ses deux bords longitudinaux voisins l'un de l'autre et tournés l'un vers l'autre, par une soudure et/ou un collage.

3. Elément de filtre suivant la revendication 1 ou 2, **caractérisé en ce que** le milieu (59) filtrant constitué de cellulose sert à séparer de l'eau d'huiles hydrauliques et agrandit en volume des gouttelettes d'eau du mélange eau-huile, qui, en raison de la différence de la masse volumique entre l'eau et l'huile, descendent sous l'effet de la force de la gravité.

4. Elément de filtre suivant l'une des revendications précédentes, **caractérisé en ce que** le milieu (59) filtrant constitué de cellulose est pourvu au moins sur l'un de ses côtés, comme le côté du filtrat et le côté du non-filtrat, d'au moins une couche de protection, comme un non-tissé ou un tissé, qui suit la courbe des plis.

5. Elément de filtre suivant l'une des revendications précédentes, **caractérisé en ce que** le filtre (69) de particules a un autre milieu filtrant plissé dont les plis de filtre ont une densité de tassement plus grande et possèdent une hauteur de pli plus grande que les plis (66) de filtre du un milieu (59) filtrant en matière cellulosique.

6. Elément de filtre suivant l'une des revendications précédentes, **caractérisé en ce que** les deux coiffes (13, 19) d'extrémité opposées l'une à l'autre, reçoivent, comme parties de fermeture entre elles, les deux pièces creuses, constituées sous forme de cylindre creux, des deux milieux (59, 69) filtrant et **en ce que** le filtre (69) de particules entoure le filtre (59) de cellulose, de préférence sur son côté de sortie.

7. Installation ayant un élément (3) de filtre suivant l'une des revendications précédentes, comprenant une enveloppe (1) de filtre, qui a un espace de réception de l'élément (3) de filtre, avec plusieurs points (41, 45, 47) de raccordement pour du fluide, **caractérisé en ce que** l'espace de réception est traversé au moins en partie par une barre (31) de réception, sur laquelle l'élément (3) de filtre peut être mis de manière centrée, lequel peut être fixé à la barre (31) par l'une de ses coiffes (19) d'extrémité et par un dispositif (35, 39) supplémentaire de fixation.

8. Installation suivant la revendication 7, **caractérisée en ce que**, lorsque l'élément (3) de filtre est à l'état monté sur la barre (31) de réception dans l'enveloppe (1), chaque coiffe (13,19) d'extrémité est montée par une entretoise (27) à fonction d'étanchéité tantôt sur le dispositif (35, 39) de fixation et tantôt sur un plateau (11) intermédiaire de l'enveloppe (1).

9. Installation suivant la revendication 7 ou 8, **caractérisée en ce que**, lorsque l'élément (3) de filtre est traversé de l'extérieur ou de l'intérieur vers l'intérieur ou vers l'extérieur, le plateau (11) intermédiaire conjointement avec l'élément (3) de filtre sépare un espace (43, 53) collecteur d'eau, ayant des points (45, 47) de raccordement de fluide pour de l'huile et pour de l'eau, du côté propre d'un espace de non filtrat, ayant un point (41, 47) de raccordement pour du fluide pour l'arrivée du mélange eau-huile du côté du non filtrat de l'élément (3) de filtre.

10. Installation suivant l'une des revendications 7 à 9, **caractérisée en ce que** l'enveloppe (1) est conçue sous la forme d'une pièce à insérer dans un réservoir de fluide et est fermée par rapport à ce qui l'entoure, au moyen d'un couvercle (9) d'enveloppe, qui peut être retiré.
